(19) Europäisches Patentamt
European Patent Office
Office européen des brevets

(11) **EP 2 362 174 A1**

(12) **EUROPÄISCHE PATENTANMELDUNG**

(43) Veröffentlichungstag:
**31.08.2011 Patentblatt 2011/35**

(51) Int Cl.:
*F27D 3/12* *(2006.01)*  *F27D 15/02* *(2006.01)*
*F27D 99/00* *(2010.01)*  *C22B 1/26* *(2006.01)*
*B65G 25/06* *(2006.01)*

(21) Anmeldenummer: 10000943.0

(22) Anmeldetag: **29.01.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Claudius Peters Projects GmbH**
**21614 Buxtehude (DE)**

(72) Erfinder:
• **Bock, Uwe**
**21680 Stade (DE)**

• **Sprinz, Uwe**
**21698 Harsefeld (DE)**
• **Vorrath, Timo**
**21706 Drochtersen (DE)**
• **Göcke, Volker**
**21702 Kakerbeck (DE)**
• **Harmeier, Lothar**
**26909 Neulehe (DE)**

(74) Vertreter: **Glawe, Delfs, Moll**
**Patent- und Rechtsanwälte**
**Rothenbaumchaussee 58**
**20148 Hamburg (DE)**

(54) **Vorrichtung zum Kühlen von Schüttgut**

(57)    Die Erfindung betrifft Vorrichtung (1) zum Kühlen von Schüttgut, die einen, eine Schüttgutschicht (90) von einem Aufgabeende (4) in einer Förderrichtung (11) zu einem Abgabeende (5) fördernden, gasdurchlässigen Rost (10) aufweist, wobei der Rost (10) mehrere in Förderrichtung (11) langgestreckte, in Förderrichtung (11) wechselnd vor- und zurückbewegbare Planken (12) umfasst und zwischen den Planken (12) eine mit Sperrgas beaufschlagte Abdichtvorrichtung (20) vorgesehen ist. Es handelt sich also um einen "Walking Floor"-Kühler. Erfindungsgemäß ist der Rostunterraum (30) unterhalb des Rosts (10) in wenigstens zwei mit Gas zu unterschiedlichen Drücken beaufschlagbare Belüftungskammer (32.1, 32.2, 32.3) aufgeteilt, wodurch sich auch der Rost (10) in wenigstens zwei Belüftungszonen (33.1, 33.2, 33.2) in Förderrichtung (11) aufgeteilt wird. Die Abdichtvorrichtung (20) in einer zweiten Belüftungszone (33.2) ist erfindungsgemäß so mit der Belüftungskammer (32.1) einer ersten Belüftungszone (33.1) verbunden ist, dass der, der ersten Belüftungszone (33.1) zugewandte Teil der Abdichtvorrichtung (20) in der zweiten Belüftungszone (33.2) mit Gas aus der Belüftungskammer der ersten Belüftungszone (33.1) als Sperrgas beaufschlagt ist. Durch die Erfindung wird sichergestellt, dass an jedem Punkt der Abdichtvorrichtung (20) ein Sperrgas-strom (24) vorhanden ist.

Fig. 4

**Beschreibung**

Die Erfindung betrifft eine Vorrichtung zum Kühlen von Schüttgut.

Aus dem Stand der Technik - bspw. der EP 1 475 594 A1 - sind Vorrichtungen zum Fördern von Schüttgut auf einem Rost bekannt, wobei eine auf dem Rost befindliche Schüttgutschicht von einem durch den Rost hindurch geführten Gasstrom gekühlt wird. Der Rost umfasst mehrere in Förderrichtung langgestreckte Planken, die in Förderrichtung vor- und zurückgehend angetrieben werden können, wobei wenigstens zwei benachbarte Planken gleichzeitig vor- und ungleichzeitig zurückbewegt werden. Dieses Prinzip der Schüttgutförderung ist auch als "Walking floor" bekannt.

Um einen Kühlgasstrom durch die Schüttgutschicht zu gewährleisten, ist ein unterhalb des Rostes angeordneter Rostunterraum mit einem Überdruck gegenüber der Umgebung beaufschlagt, so dass Kühlgas - in der Regel Luft - vom Rostunterraum durch den Rost und die Schüttgutschicht in die Umgebung entweicht. Innerhalb der Schüttgutschicht stellt sich dabei ein Druck ein, der zwischen dem Druck im Rostunterraum und dem Umgebungsdruck liegt.

Zwischen zwei benachbarten Planken des Rostes ist jeweils eine Abdichtvorrichtung vorgesehen. Die Abdichtvorrichtung soll verhindern, dass das Schüttgut aus der Schüttgutschicht durch den Zwischenraum zwischen zwei benachbarten Planken in den Rostunterraum gelangen kann (sog. Rostdurchfall). Im Stand der Technik ist es bekannt eine entsprechende Abdichtvorrichtung als Labyrinthdichtung auszuführen.

Um zu verhindern, dass Schüttgut in die Labyrinthdichtung eindringen und diese beschädigen oder zerstören kann, ist es weiterhin bekannt, die Labyrinthdichtung auf der von der Schüttgutschicht abgewandten Seite mit Druck zu beaufschlagen, so dass ein kontinuierlicher Gasstrom durch die Labyrinthdichtung von der, der Schüttgutschicht abgewandten Seite hin zur der, der Schüttgutschicht zugewandten Seite vorhanden ist. Dieser Gasstrom wird auch als Sperrgasstrom beizeichnet, das durch die Labyrinthdichtung strömende Gas auch als Sperrgas.

Der Sperrgasstrom kann allein dadurch erreicht werden, dass die dem Schüttgut abgewandte Seite der Labyrinthdichtung mit dem druckbeaufschlagten Rostunterraum in Verbindung steht. Es können aber auch - wie in der DE 10 2005 032518 A1 gezeigt - gesonderte Luftverteiler vorgesehen sein, die mit der Schüttgutschicht abgewandten Seite der Labyrinthdichtungen in Verbindung stehen und diese entsprechend mit Druck beaufschlagt sind, so dass ein kontinuierlicher Sperrgasstrom durch die Labyrinthdichtung gewährleistet ist.

Um die Kühlung der auf dem Rost befindlichen Schüttgutschicht optimieren zu können, ist bekannt, den Rostunterraum in einzelne Kammern aufzuteilen, die mit unterschiedlichen Drücken beaufschlagt werden können (vgl. DE 10 2005 032518 A1). Indem die einzelnen Kammer mit unterschiedlichen Drücken beaufschlagt werden können, ist es möglich, den Kühlgasstrom durch die Schüttgutschicht entlang der Förderrichtung des Rostes so zu variieren, dass ein optimaler Kühlungsverlauf für das zu kühlende Schüttgut erreicht wird. Dabei bilden sich in der Schüttgutschicht Zonen unterschiedlicher Drücke, wobei das Druckgefälle zwischen zwei benachbarten Zonen steil ausfällt.

Wird die Labyrinthdichtung im Bereich einer jeden Kammer jeweils mit dem in der Kammer herrschenden Druck beaufschlagt, kommt es im Übergangsbereich von einer Kammer zur Nächsten zu einem Druckausgleich im Bereich der Labyrinthdichtung. Das dabei entstehende Druckgefälle ist gegenüber dem Druckgefälle in der Schüttgutschicht flacher ausgebildet, weshalb der Druck in der Schüttgutschicht in einigen Bereichen größer sein kann als der Druck in der Labyrinthdichtung. In diesen Bereichen kommt es dann zu einer Gasströmung von der Schüttgutschicht in die Labyrinthdichtung - d.h. entgegen der gewünschten Sperrgasströmung. Der Eintritt von Schüttgut in die Labyrinthdichtung wird dadurch stark gefördert und die Labyrinthdichtung kann beschädigt oder zerstört werden.

In dem Fall, dass die Labyrinthdichtung mit einem einheitlichen Luftverteiler in Verbindung steht, muss dieser zwingend mit einem Druck beaufschlagt sein, der größer ist als der Maximaldruck der Kammern. Ansonsten besteht die Gefahr, dass zumindest im Bereich mindestens einer Kammer der Druck in der Schüttgutschicht höher ist als der Druck in der Labyrinthdichtung. Im Bereich dieser Kammer würde es zu einem durch eine Gasströmung von der Schüttgutschicht in die Labyrinthdichtung geförderten Schüttguteintritt in die Labyrinthdichtung kommen. Andererseits kann es bei einer großen Druckdifferenz zwischen einer Kammer und dem mit der Labyrinthdichtung verbundenen Luftverteiler zu unerwünschten Verwirbelungen in der Schüttgutschicht kommen.

Aufgabe der vorliegenden Erfindung ist es, eine Vorrichtung zum Kühlen von Schüttgut zu schaffen, die die Nachteile der im Stand der Technik bekannten Vorrichtungen nicht oder nur noch im verringerten Maße aufweist.

Ausgehend vom eingangs genannten Stand der Technik wird diese Aufgabe durch eine Vorrichtung gemäß nach Hauptanspruch gelöst. Vorteilhafte Ausführungsformen ergeben sich aus den abhängigen Ansprüchen.

Demnach betrifft die Erfindung eine Vorrichtung zum Kühlen von Schüttgut, die einen, eine Schüttgutschicht von einem Aufgabeende in einer Förderrichtung zu einem Abgabeende fördernden, gasdurchlässigen Rost aufweist, wobei der Rost mehrere in Förderrichtung langgestreckte, in Förderrichtung wechselnd vor-und zurückbewegbare Planken umfasst und zwischen den Planken eine mit Sperrgas beaufschlagte Abdichtvorrichtung vorgesehen ist, wobei unterhalb des Rosts wenigstens zwei mit Gas zu unterschiedlichen Drücken beaufschlagbare Belüftungskammer zur Teilung des Rosts in wenigstens zwei Belüftungszonen in Förderrichtung vorgesehen sind und die Abdichtvorrichtung in einer zweiten Belüftungszone so mit der Belüftungskammer einer ersten Belüftungszone verbunden ist, dass der, der ersten Belüftungszone zugewandte Teil der Abdichtvorrichtung in der zweiten Belüftungszone mit Gas aus der Belüftungskammer der ersten Belüftungszone als Sperrgas beaufschlagt ist.

Der Rostunterraum ist also in mehrere Belüftungskammern unterteilt, die mit Gas zu unterschiedlichen Drücken beaufschlagt werden können. Das Gas aus den Belüftungskammern strömt als Kühlgas durch den Rost und die darauf befindliche Schüttgutschicht in die Umgebung. Auf Grund der unterschiedlichen Drücke in den Belüftungskammern kommt es entlang des Rostes auch zu unterschiedlichen Drücken innerhalb der Schüttgutschicht. Entlang des Rostes entstehen also einzelne Belüftungszonen, die sich durch unterschiedliche Drücke in der Schüttgutschicht auszeichnen. In der Regel korrespondieren die Belüftungszonen mit den Belüftungskammern. Es ist aber auch möglich, dass bei mehr als zwei Belüftungskammern zwei benachbarte Belüftungskammern mit identischem Druck beaufschlagt werden und somit eine gemeinsame Belüftungszone bilden.

Beim Übergang von einer mit höherem Druck beaufschlagten Belüftungskammer zu einer mit niedrigerem Druck beaufschlagten Belüftungskammer kommt es zu einem steilen Druckgefälle in der Schüttgutschicht. Dieses Druckgefälle kennzeichnet den Übergang von einer Belüftungszone zur nächsten.

Wäre eine mit Sperrgas beaufschlagte Abdichtvorrichtung (bspw. eine Labyrinthdichtung), die sich über die gesamte Länge des Rostes erstreckt, abschnittsweise mit der jeweils benachbarten Belüftungskammern als Sperrgasquelle verbunden, so käme es auch in der Abdichtvorrichtung am Übergang von einer Belüftungskammer zur Nächsten zu einem Druckgefälle. Dieses Druckgefälle fällt grundsätzlich flacher aus als das Druckgefälle in der Schüttgutschicht, da es entlang der Abdichtvorrichtung zu nahezu ungehinderten Druckausgleichsströmungen kommen kann. Aufgrund der unterschiedlichen Druckgefälle kann in Bereichen der Druck in der Schüttgutschicht höher sein als in der Abdichtvorrichtung, wodurch es in diesen Bereichen zu einer Gasströmung von der Schüttgutschicht in Richtung des Rostunterraums kommen kann. Eine entsprechende Gasströmung erfüllt den Zweck eines Sperrgasstroms nicht mehr, da der Gasstrom einem Eintritt von Schüttgut in die Abdichtvorrichtung nicht entgegenwirkt sondern vielmehr den Eintritt von Schüttgut in die Abdichtvorrichtung fördert. Dabei kann es zu Beschädigungen und/oder Zerstörung der Abdichtvorrichtung kommen.

Erfindungsgemäß ist vorgesehen, dass im Übergangsbereich von einer Belüftungszone zur nächsten die Abdichtvorrichtung nur mit dem Druck aus einer Belüftungskammer beaufschlagt ist, es also im Übergangsbereich von einer Belüftungszone zur nächsten lediglich zu einem Druckgefälle in der Schüttgutschicht, nicht jedoch zu einem Druckgefälle in der Abdichtvorrichtung kommt. Dies wird dadurch erreicht, dass die Abdichtvorrichtung in einer zweiten Belüftungszone so mit der Belüftungskammer einer ersten Belüftungszone verbunden ist, dass der der ersten Belüftungszone zugewandte Teil der Abdichtvorrichtung in der zweiten Belüftungszone mit der Gas aus der Belüftungskammer der ersten Belüftungszone als Sperrgas beaufschlagt ist. Die

Erfindung hat erkannt, dass die im Stand der Technik bekannten Nachteile vermieden werden können, wenn das Druckgefälle in der Schüttgutschicht, d. h. der Übergang von einer Belüftungszone zur nächsten, räumlich nicht mit dem Druckgefälle in der Abdichtvorrichtung zusammenfällt. Das Druckgefälle in der Abdichtvorrichtung wird erfindungsgemäß vom Übergangsbereich zweier benachbarter Belüftungszonen in eine der beiden Belüftungszonen verschoben.

Die übrigen Bereiche der Abdichtvorrichtung können mit der jeweils angrenzenden Belüftungskammer verbunden sein.

Es ist bevorzugt, dass die jeweils einander zugewandten Teile der Abdichtvorrichtung in zwei benachbarten Belüftungszonen so mit den Belüftungskammern der Belüftungszonen verbunden sind, dass sie mit Gas aus der, den höheren Druck aufweisenden Belüftungskammer beaufschlagbar sind. Dadurch wird sichergestellt, dass die Abdichtvorrichtung im Übergangsbereich von einer Belüftungszone zur nächsten immer mit einem Druck der größer oder gleich dem Druck in den Belüftungskammern beaufschlagt ist. Es ist dann immer ein Sperrgasstrom durch die Abdichtvorrichtung vorhanden.

Bei dem Druckgefälle von einer Belüftungszone zur Nächsten kann es sich einen Druckabfall oder einen Druckanstieg handeln. Im Übrigen ist für den Fachmann selbstverständlich, dass es für einen ausreichenden Sperrgasstrom nicht ausschließlich auf die statischen Drücke in der Belüftungskammer bzw. an der dem Schüttgut abgewandten Seite der Abdichtvorrichtung ankommt, sondern vielmehr um den Druck am Übergang zwischen Rost und Schüttgutschicht bzw. Abdichtvorrichtung und Schüttgutschicht, der auf Grund von Druckverlusten des strömenden Gases geringer sein kann als der vorgenannte statische Druck. Aus Übersichtlichkeitsgründen wird jedoch vorliegend davon ausgegangen, dass dieser Druckverlust vernachlässigbar ist.

Es ist bevorzugt, dass zwischen zwei benachbarten Belüftungskammern eine Trennwand vorgesehen ist. Im Bereich der Abdichtvorrichtung in dem, der ersten Belüftungszone zugewandten Teil der zweiten Belüftungszone kann ein zur Speisung der Abdichtvorrichtung mit Sperrgas ausgebildeter Kanal vorgesehen sein, der sich von der Belüftungskammer der ersten Belüftungszone in die Belüftungskammer der zweiten Belüftungszone erstreckt. Der Kanal ist an seinem von der Trennwand entfernten Ende vorzugsweise durch eine Endplatte abgeschlossen. Durch einen entsprechenden Kanal ist es möglich, dass die Abdichtvorrichtung im Bereich der zweiten Belüftungszone in dem der ersten Belüftungszone zugewandten Teil mit Gas aus der Belüftungskammer der ersten Belüftungszone gespeist wird. Das Druckgefälle im Bereich der Abdeckvorrichtung wird durch den Kanal in die zweite Belüftungszone verschoben, und fällt somit nicht mit dem Druckgefälle in der Schüttgutschicht zusammen, welches an der Trennwand zwischen den beiden Belüftungskammern auftritt.

Weiter bevorzugt ist es, dass sich der Kanal symmetrisch in beide Belüftungszonen erstreckt. Vorzugsweise ist dabei an beiden Enden des Kanals jeweils eine Rückschlagklappe vorgesehen, so dass der Kanal immer mit derjenigen Belüftungskammer in Druckausgleich steht, welche den höheren Druck aufweist. Die Rückschlagklappen können auch in einer separaten Zuleitung von den Belüftungskammern zu dem Kanal angeordnet sein. Alternativ zu den Rückschlagklappen können auch Steuerventile vorgesehen sein. Indem so in zwei benachbarten Belüftungszonen die jeweils einander zugewandten Teile der Abdichtvorrichtung mit der mit höheren Druck beaufschlagten Belüftungskammer verbunden sind, ist es frei wählbar, welche der beiden Belüftungskammern den höheren Druck aufweist. Insbesondere ist es möglich, die Drücke der einzelnen Belüftungskammern beliebig anzupassen, ohne dass auf ein positives oder negatives Vorzeichen der Druckdifferenz zwischen den beiden Belüftungskammern geachtet werden müsste.

Es ist bevorzugt, dass sich der Kanal zur Speisung der Abdichtvorrichtung mit Sperrgas über die gesamte Länge des Rostes erstreckt. Durch Trennelemente kann der Kanal in Sektionen unterteilt sein. Die vorhergehend beschriebene Funktion eines sich in eine Belüftungskammer erstreckenden Kanals kann durch diese Sektionen erreicht werden. Bevorzugt ist es, wenn wenigstens eine Sektion mit zwei Belüftungskammern verbunden ist und zwischen der Sektion und den Belüftungskammer jeweils eine Rückschlagklappe oder ein steuerbares Ventil vorgesehen ist. Durch die Rückschlagklappen oder die steuerbaren Ventile ist es möglich, die Sektion des Kanals immer aus der Belüftungskammer mit dem höheren Druck zu speisen.

Anstelle von jeweils zwei Rückschlagklappen kann auch eine Wechselklappe vorgesehen ist. Bei einer Wechselklappe handelt es sich um ein Drei-Wege-Steuerelement mit zwei Eingängen und einem Ausgang, wobei jeweils der Eingang mit dem Ausgang verbunden ist, an dem der höhere Druck anliegt. Die Eingänge können mit zwei Belüftungskammern verbunden sein, während der Ausgang mit einem Kanal oder einer Sektion eines Kanals verbunden ist. Der Kanal oder die eine Sektion des Kanals ist dann immer mit der Belüftungskammer mit dem höheren Druck verbunden.

Zwischen Belüftungskammern und den Kanälen bzw. den Sektionen eines Kanals können zusätzliche steuerbare Ventile vorgesehen sein. Mit diesen Ventilen lässt sich eine Druckdifferenz zwischen den Kanälen bzw. den einzelnen Sektionen des Kanals bewerkstelligen. Es ist so möglich, die unterschiedlichen Druckverluste, die beim Durchströmen des Rostes bzw. der Abdichtvorrichtung entstehen, zu berücksichtigen. Der Druck an der Oberseite des Rostes und an der Oberseite der Abdichtvorrichtung kann aneinander angeglichen werden.

Bei der Abdichtvorrichtung kann es sich bevorzugt um eine Labyrinthdichtung handeln. Als Kühlgas bzw. Sperrgas wird bevorzugt Luft eingesetzt.

Die Erfindung wird nun anhand vorteilhafter Ausführungsformen unter Bezugnahme auf die beigefügten Zeichnungen beispielhaft beschrieben. Es zeigen:

Fig. 1: einen schematischen Längsschnitt durch eine erste Ausführungsform einer erfindungsgemäßen Vorrichtung zum Kühlen von Schüttgut;

Fig. 2: eine Schnittdarstellung entlang der Schnittlinie II-II aus Fig. 1;

Fig. 3: eine Detailansicht des Details III aus Fig. 2;

Fig. 4: eine Schnittdarstellung entlang der Schnittlinie IV-IV aus Fig. 2; und

Fig. 5a-d: weitere Ausführungsformen erfindungsgemäßer Vorrichtungen zum Kühlen von Schüttgut.

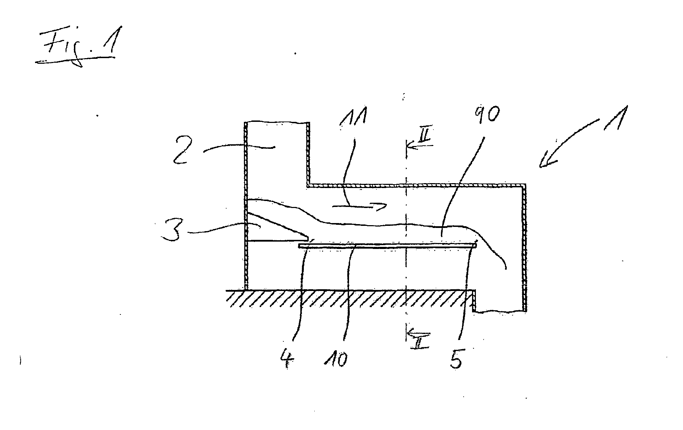

Fig. 1 zeigt ein erstes Ausführungsbeispiel einer erfindungsgemäßen Vorrichtung 1 zum Kühlen von Schüttgut. Das zu kühlende Schüttgut gelangt über einen Aufgabeschacht 2 auf einen geneigten Aufgabeabschnitt 3 zum Aufgabeende 4 eines Rosts 10, wo es eine Schüttgutschicht 90 bildet. Der Rost 10, dessen Aufbau später näher erläutert wird, fördert das Schüttgut vom Aufgabeende 4 zum Abgabeende 5. Am Abgabeende 5 des Rosts 10 wird das Schüttgut abgeführt. Die Förderrichtung des Rosts 10 ist mit dem Pfeil 11 angedeutet. Die Förderrichtung 11 verläuft vom Aufgabeende 4 zum Abgabeende 5 des Rostes 10.

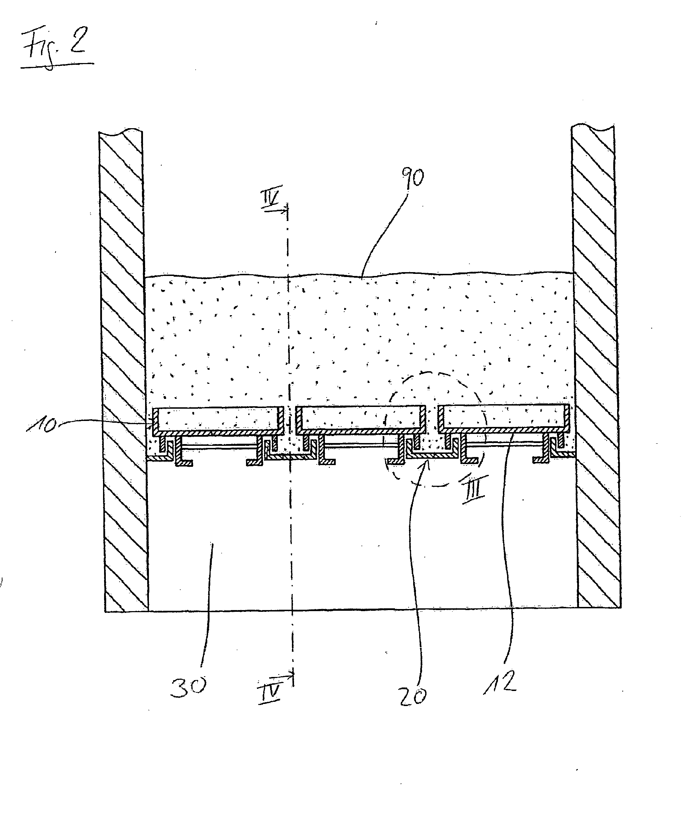

Der Rost 10 umfasst mehrere in Förderrichtung 11 langgestreckte, in Förderrichtung 11 wechselnd vor- und zurückbewegbare Planken 12 (vgl. Fig. 2). Indem sich die Planken 12 einzeln vor- und zurückbewegen lassen, kann das Schüttgut nach dem "Walking floor"-Prinzip durch den Rost 10 vom Abgabeende 4 in Förderrichtung 11 zum Ausgabeende 5 gefördert werden.'Gemäß dem "walking floor"-Prinzip werden zwei benachbarte Planken 12 gleichzeitig vor- und ungleichzeitig zurückbewegt.

Die den Rost 10 bildenden Planken 12 sind gasdurchlässig ausgebildet. Der Rost 10 selbst ist somit ebenfalls gasdurchlässig. Unterhalb des Rostes 10 befindet sich der Rostunterraum 30. Um die Schüttgutschicht 90 zu kühlen, strömt Gas vom Rostunterraum 30 durch den Rost 10 und die Schüttgutschicht 90 in die Umgebung.

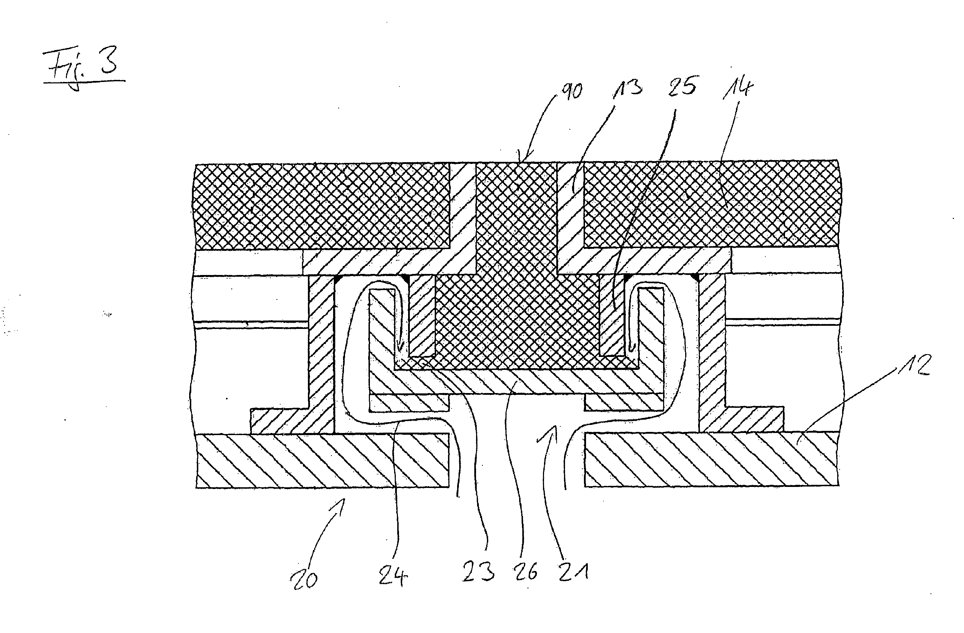

In Fig. 3 ist das Detail III aus Fig. 2 dargestellt. An der Oberseite der Planken 12 können durch Wände 13 abgeteilte Mulden 14 ausgebildet sein. In diesen Mulden 14 kann sich Schüttgut anlagern, welches gegenüber den vor- und zurückbewegten Planken 12 keine Relativbewegung durchführt. Die Planken 12 sind so durch Beschädigungen auf Grund von Abreibungen durch das Schüttgut geschützt.

Die Abdichtvorrichtung 20 zwischen zwei benachbarten Planken 12 ist als Labyrinthdichtung 21 ausgeführt, wobei das Labyrinth durch an den Planken 12 befestigten Leisten 25 und eine feststehende Rinne 26 gebildet ist. Das auf dem Rost 10 befindliche Schüttgut kann in den Zwischenraum 22 zwischen den einander zugewandten Wänden 13 zweier benachbarter Planken 12 eindringen, jedoch wird es durch die Labyrinthdichtung 21 am Rostdurchfall gehindert. Im Regelfall gelangt also kein Schüttgut in den Rostunterraum 30.

Es ist - wie dargestellt - möglich, dass das Schüttgut in einen Teil 23 der Labyrinthdichtung 21 eindringt. Um zu verhindern, dass das Schüttgut weiter in die Labyrinthdichtung 21 eindringt, ist ein Sperrgasstrom vorgesehen. Dieser Sperrgasstrom ist durch den Pfeil 24 angedeutet. Das Sperrgas durchströmt dabei die Labyrinthdichtung 21 von dem Rostunterraum 30 her hin zur Schüttgutschicht 90. Der Sperrgasstrom 24 verläuft also entgegengesetzt zu der Richtung, in der das Schüttgut in die Labyrinthdichtung 21 eindringen kann. Das Schüttgut wird durch den Sperrgasstrom 24 zurückgedrängt und ein Eindringen des Schüttgutes in die Labyrinthdichtung 21, welches Beschädigungen oder gar Zerstörung der Labyrinthdichtung 21 zur Folge haben kann, wird effektiv verhindert. Ein Rostdurchfall des Schüttgutes wird im Bereich der Abdichtungvorrichtung 20 dadurch ebenfalls ausgeschlossen.

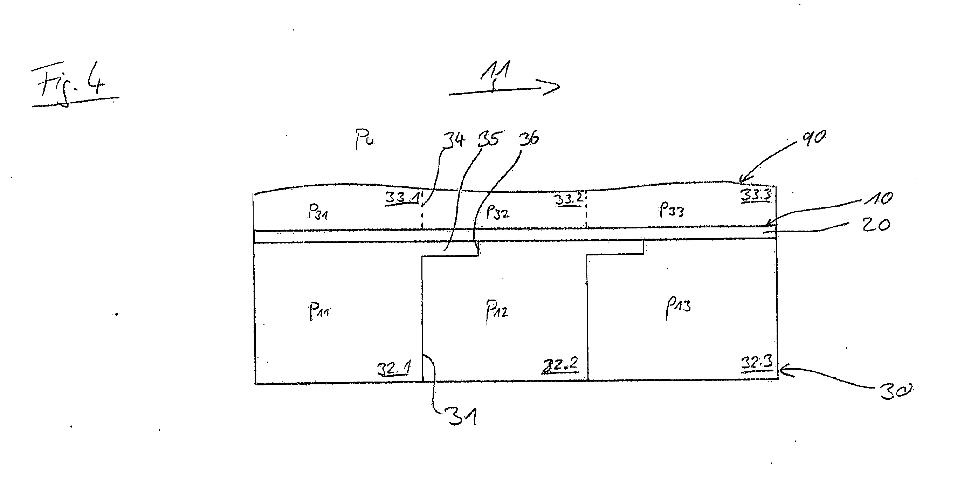

In Fig. 4 ist eine schematische Schnittdarstellung des Rostes 10 entlang der Schnittlinie IV-IV aus Fig. 2 dargestellt, wobei sich die Darstellung lediglich auf den Bereich des Rostes 10 beschränkt (vgl. Fig. 1). Oberhalb des Rostes 10 und auf diesen aufliegend befindet sich die zu fördernde Schüttgutschicht 90. Unterhalb des Rostes 10 befindet sich der Rostunterraum 30. Gemäß Fig. 2 geht der dargestellte Schnitt durch die Abdichtvorrichtung 20.

Der Rostunterraum 30 ist durch Trennwände 31 in mehrere Belüftungskammern 32.1, 32.2, 32.3 unterteilt. Die einzelnen Belüftungskammern 32.1, 32.2, 32.3 sind untereinander druckdicht und können mit verschiedenen Drücken $p_{11}$, $p_{12}$, $p_{13}$ beaufschlagt werden. Die einzelnen Drücke $p_{11}$, $p_{12}$, $p_{13}$ sind höher als der Umgebungsdruck $p_u$, so dass Gas aus den Belüftungskammern 32.1, 32.2, 32.3 durch den gasdurchlässigen Rost 10 und die darauf liegende Schüttgutschicht 90 strömt. Aufgrund dieser Gasströmung stellt sich in der Schüttgutschicht 90 ein von der Umgebung unterschiedlicher Druck ein, wobei die Drücke $p_{31}$, $p_{32}$, $p_{33}$ in der Schüttgutschicht 90 jeweils von den Drücken $p_{11}$, $p_{12}$,

$p_{13}$ der darunter liegenden Belüftungskammern 32.1, 32.2, 32.3 abhängig sind. Im Allgemeinen gilt

$$p_{13} > p_{31} > p_u,$$

$$p_{12} > p_{32} > p_u \text{ und}$$

$$p_{13} > p_{33} > p_u.$$

Die Drücke $p_{31}$, $p_{32}$, $p_{33}$ können grundsätzlich verschieden voneinander sein.

Ein zusammenhängender Bereich mit konstantem Druck wird als Belüftungszone bezeichnet. Im dargestellten Beispiel sind entsprechend der Anzahl der Belüftungskammern 32.1, 32.2, 32.3 drei Belüftungszonen 33.1, 33.2, 33.3 vorhanden. Der Druck der einzelnen Belüftungszonen 33.1, 33.2, 33.3 ist im dargestellten Beispiel in Förderrichtung 11 abfallend, d. h.

$$p_{31} > p_{32} > p_{33}.$$

Im Übergangsbereich 34 zwischen zwei benachbarten Belüftungszonen 33.1, 33.2 bzw. 33.2, 33.3 kommt es zu einem Druckabfall in der Schüttgutschicht 90, nämlich von $p_{31}$ zu $p_{32}$ bzw. von $p_{32}$ zu $p_{33}$. Aufgrund von Strömungswiderständen in der Schüttgutschicht 90 kommt es innerhalb der Schüttgutschicht 90 nur zu geringen Ausgleichsströmungen parallel zum Rost 10, weshalb das Druckgefälle in Übergangsbereich 34 steil ist. Die Übergangsbereiche 34 sind in Förderrichtung 11 daher kaum ausgedehnt.

Die Übergangsbereiche 34 korrespondieren mit der Position der Trennwände 31. Die Trennwände 31 lassen sich gegenüber der Unterseite des Rostes 10 gut abdichten, so dass es auch unterhalb des Rostes 10 keine Ausgleichsströmung zwischen zwei benachbarten Belüftungskammern 32.1 und 32. 2 bzw. 32.2 und 32.3 kommt .

In den Abdichtvorrichtungen 20 - insbesondere in Labyrinthdichtungen 21 - ist eine klare Trennung von Druckbereichen, wie bspw. zwischen den Belüftungskammern 32.1, 32.2, 32.3, nicht möglich. Im Bereich der Abdichtvorrichtung 20 kann es daher zu einer Strömung parallel zum Rost 10, außerhalb der Schüttgutschicht 90 kommen. Aufgrund einer entsprechenden Ausgleichsströmung ist der Übergang zwischen zwei Bereichen mit unterschiedlicher Sperrgasbeaufschlagung und unterschiedlichen Drücken räumlich ausgedehnt. Das Druckgefälle an einem solchen Übergang ist flach.

In Fällen, in denen die Abdichtvorrichtung 20 mit dem Gas aus den jeweils benachbarten Belüftungskammern 32.1, 32.2, 32.3 gespeist würde und somit die Übergangsbereiche 34 der Belüftungszonen 33.1, 33.2, 33.3 mit den Übergängen zwischen den Bereichen der unterschiedlichen Sperrluftbeaufschlagung der Abdichtvorrichtung 20 zusammenfielen, könnte aufgrund der unterschiedlichen Druckgefälle Bereiche ausgebildet werden, in denen der Druck in der Schüttgutschicht 90 höher ist als der Druck in der Abdichtvorrichtung 20. In diesen Bereichen fände eine Gasströmung von der Schüttgutschicht 90 in die Abdichtvorrichtung 20 statt. Diese Gasströmung verliefe entgegengesetzt zu dem eigentlich erwünschten Sperrgasstrom 24, wodurch das Eindringen von Schüttgut in die Abdichtvorrichtung 20 gefördert werden würde.

Bei der ersten Ausführungsform der erfindungsgemäßen Vorrichtung zum Kühlen von Schüttgut ist daher vorgesehen, dass im Bereich der Abdichtvorrichtung 20 in den, der ersten Belüftungszone 32.1 zugewandten Teil der zweiten Belüftungszone 32.2 ein zur Speisung der Abdichtvorrichtung 20 mit Sperrgas ausgebildeter Kanal 35 vorgesehen ist. Der Kanal 35 erstreckt sich von der Trennwand 31 in die zweite Belüftungskammer 32.2. Er ist zur ersten Belüftungskammer 32.1 offen und gegenüber der zweiten Belüftungskammer 32.2 durch eine Endplatte 36 abgeschlossen. Durch den Kanal 35 wird sichergestellt, dass im Übergangsbereich 34 zwischen den Belüftungszonen 33.1 und 33.2 die Abdichtvorrichtung 20 mit dem Gas aus der Belüftungskammer 32.1 als Sperrgas beaufschlagt ist. Der Druck im Kanal 35 entspricht dabei dem Druck $p_{11}$ der ersten Belüftungskammer 32.1, womit sichergestellt ist, dass der Druck in der Schüttgutschicht 90 im Bereich des Übergangs von einer Belüftungszone 33.1 zur anderen 33.2 nie größer ist als der Druck, mit dem die Abdichtvorrichtung 20 beaufschlagt ist. Über den gesamten Übergangsbereich 34 kommt es also immer zu einer Sperrgasströmung 24.

Eine Veränderung des an der Abdichtvorrichtung 20 anliegenden Druckes erfolgt erst im Bereich der Endplatte 36. Da in diesem Bereich der Druck in der Sperrgutschicht bereits auf $p_{32}$ abgesenkt wurde, besteht auch bei einem nur flachen Druckgefälle beim Druck in der Abdichtvorrichtung 20 keine Gefahr, dass der Druck in der Abdichtvorrichtung 20 teilweise unterhalb des Druckes $p_{32}$ in der Schüttgutschicht 90 fällt.

Ein entsprechender Kanal 35 ist auch zwischen der zweiten Belüftungskammer 32.2 und der dritten Belüftungskammer 33.3 vorgesehen.

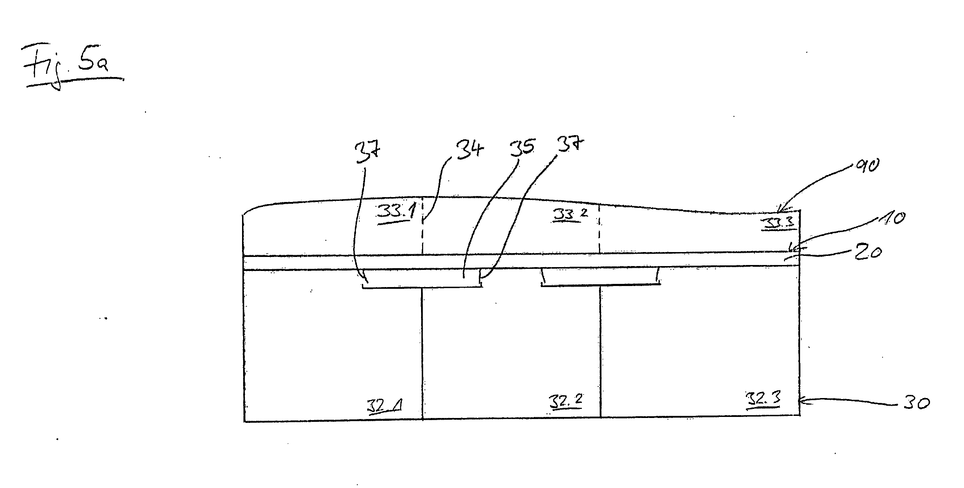

In Figur 5a bis d sind weitere Ausführungsformen der erfindungsgemäßen Vorrichtung zum Kühlen von Schüttgut dargestellt. Diese Ausführungsbeispiele sind in großen Teilen identisch mit dem ersten Ausführungsbeispiel aus Figuren 1 bis 4. Im Folgenden wird daher nur auf die Unterschiede zu dem ersten Ausführungsbeispiel eingegangen. Die Figuren 5a bis d zeigen jeweils eine Ansicht gemäß Fig. 4.

Der Kanal 35 beim zweiten Ausführungsbeispiel gemäß Fig. 5a erstreckt sich ausgehend von der Trennwand 31 symmetrisch in die jeweils angrenzenden Belüftungskammern 32.1, 32.2, 32.3. Anstelle von Endplatten 36 (vgl. Fig. 4) ist an den Enden des Kanals 35 jeweils eine Rückschlagklappe 37 vorgesehen. Die Rückschlagklappen 37 sind so angeordnet, dass eine Strömung durch die Rückschlagklappe 37 möglich ist, wenn der Druck in der angrenzenden Belüftungskammer 32.1, 32.2, 32.3 größer ist als in dem Kanal 35. Durch eine entsprechende Ausgestaltung wird erreicht, dass der Kanal 35 jeweils aus der Belüftungskammer 32.1, 32.2, 32.3 gespeist wird, die den höheren Druck aufweist. Dies hat den Vorteil, dass die Drücke in den Belüftungskammern 32.1, 32.2, 32.3 beliebig variiert werden können. Durch die Rückschlagklappen 37 wird sichergestellt, dass die Abdichtvorrichtung 20 im Bereich des Übergangs 34 immer mit einem solchen Druck beaufschlagt ist, dass ein Sperrgasstrom 24 vorhanden ist.

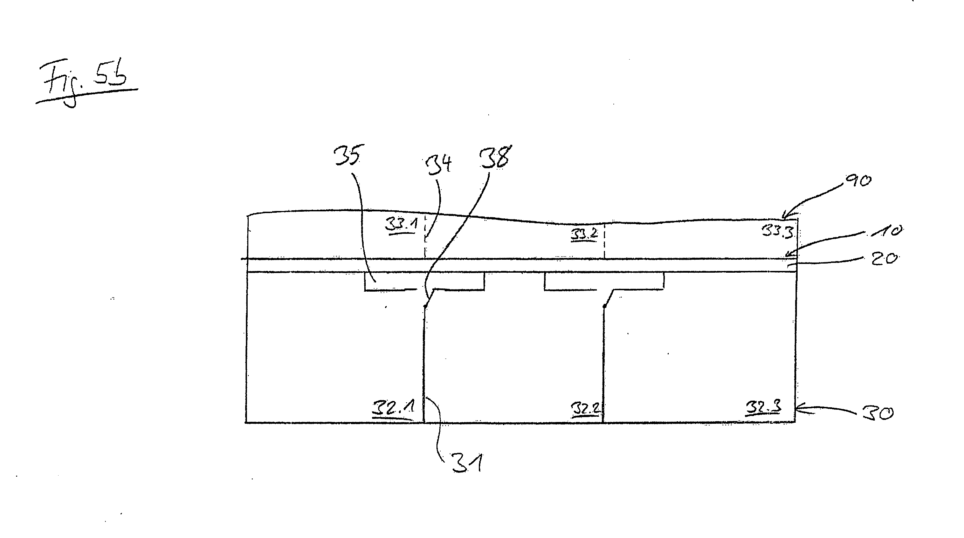

Anstelle von jeweils zwei Rückschlagklappen 37 kann auch eine einzige Wechselklappe 38 vorgesehen sein. Ein entsprechendes, drittes Ausführungsbeispiel ist in Fig. 5b dargestellt. Bei einer Wechselklappe 38 handelt es sich um ein Drei-Wege-Steuerelement mit zwei Eingängen und einem Ausgang, wobei jeweils der Eingang mit dem Ausgang verbunden ist, an dem der höhere Druck anliegt. Werden die beiden Eingänge mit jeweils einer Belüftungskammer 32.1, 32.2, 32.3 verbunden, so liegt am Ausgang, der mit dem Kanal 35 verbunden ist, immer der höhere Druck aus den Belüftungskammern 32.1, 32.2, 32.3 an. Es gilt daher das zu dem Ausführungsbeispiel aus Fig. 5a Gesagte.

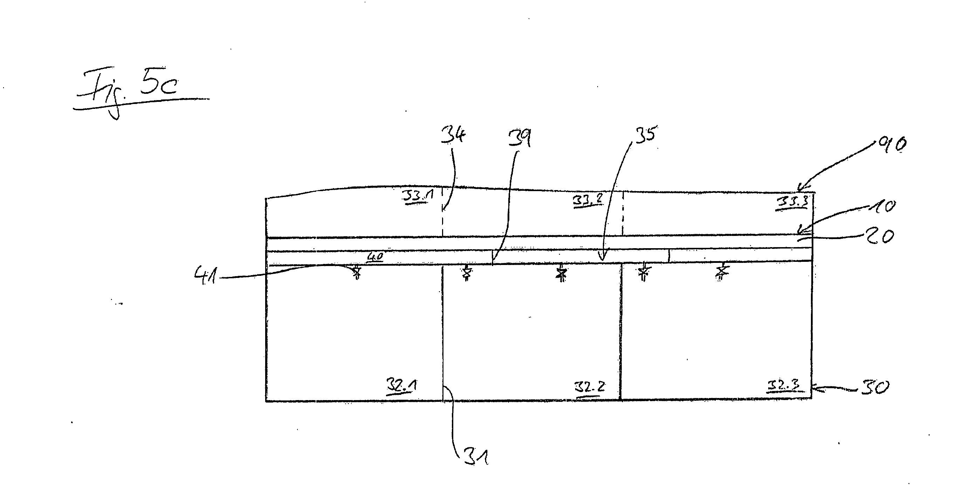

In Fig. 5c ist ein viertes Ausführungsbeispiel dargestellt. Bei diesem Ausführungsbeispiel ist unterhalb des Rostes 10 im Bereich der Abdichtvorrichtung 20 ein sich über die gesamte Länge des Rostes 10 erstreckender Kanal 35 vorgesehen, der durch Trennelemente 39 in einzelne Sektionen unterteilt ist. Die einzelnen Sektionen 40 des Kanals 35 sind über Steuerventile 41 mit jeweils einer Belüftungskammer 32.1, 32.2, 32.3 verbunden. Die Steuerventile 41 können so über eine Regelungseinrichtung (nicht dargestellt) angesteuert werden, dass sich in den einzelnen Sektionen 40 ein Druck einstellt, der eine Sperrgasströmung 24 durch die Abdichtvorrichtung 20 sicherstellt.

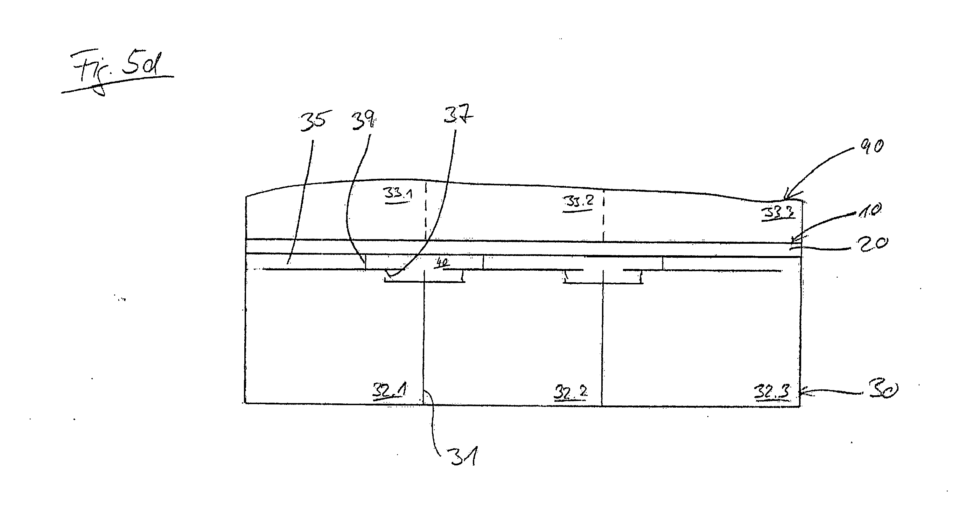

Anstelle der Steuerventile 41 können auch Rückschlagklappen 37 vorgesehen sein. Das entsprechende, fünfte Ausführungsbeispiel ist in Figur 5d dargestellt. Durch die Rückschlagklappen 37 wird sichergestellt, dass eine Sektion 40 des Kanals 35 immer mit dem höchsten Druck der mit einer Sektion 40 verbundenen Belüftungskammer 32.1, 32.2, 32.3 beaufschlagt ist. Anstelle zweier Rückschlagklappen 37 kann auch eine Wechselklappe 38 vorgesehen sein (vgl. Fig. 5b).

Bei allen Ausführungsbeispielen aus Fig. 1 bis 5d sind die Belüftungskammern 32.1, 32.2, 32.3 mit Luft beaufschlagt.

**Patentansprüche**

**1.** Vorrichtung (1) zum Kühlen von Schüttgut, die einen, eine Schüttgutschicht (90) von einem Aufgabeende (4) in einer Förderrichtung (11) zu einem Abgabeende (5) fördernden, gasdurchlässigen Rost (10) aufweist, wobei der Rost (10) mehrere in Förderrichtung (11) langgestreckte, in Förderrichtung (11) wechselnd vor- und zurückbewegbare Planken (12) umfasst und zwischen den Planken (12) eine mit Sperrgas beaufschlagte Abdichtvorrichtung (20) vorgesehen ist,
**dadurch gekennzeichnet, dass**
unterhalb des Rosts (10) wenigstens zwei mit Gas zu unterschiedlichen Drücken beaufschlagbare Belüftungskammer (32.1, 32.2, 32.3) zur Teilung des Rosts (10) in wenigstens zwei Belüftungszonen (33.1, 33.2, 33.2) in Förderrichtung (11) vorgesehen sind und die Abdichtvorrichtung (20) in einer zweiten Belüftungszone (33.2) so mit der Belüftungskammer (32.1) einer ersten Belüftungszone (33.1) verbunden ist, dass der der ersten Belüftungszone (33.1) zugewandte Teil der Abdichtvorrichtung (20) in der zweiten Belüftungszone (33.2) mit Gas aus der Belüftungskammer der ersten Belüftungszone (33.1) als Sperrgas beaufschlagt ist.

2. Vorrichtung nach Anspruch 1,
**dadurch gekennzeichnet, dass**
die jeweils einander zugewandten Teile der Abdichtvorrichtung (20) in zwei benachbarten Belüftungszonen (33.1, 33.2, 33.3) so mit den Belüftungskammern (32.1, 32.2, 32.3) der beiden Belüftungszonen (33.1, 33.2, 33.3) verbunden sind, dass sie mit Gas aus der den höheren Druck aufweisenden Belüftungskammer (32.1, 32.2, 32.3) beaufschlagbar sind.

3. Vorrichtung nach einem der vorhergehenden Ansprüche,
**dadurch gekennzeichnet, dass**
zwischen zwei benachbarten Belüftungskammern (32.1, 32.2, 32.3) eine Trennwand (31) und ein zur Speisung der Abdichtvorrichtung (20) ausgebildeter Kanal (35) vorgesehen ist, wobei sich der Kanal (35) von der Belüftungskammer (32.1) der ersten Belüftungszone (33.1) in die Belüftungskammer (32.2) der zweiten Belüftungszone (33.2) erstreckt.

4. Vorrichtung nach dem vorhergehenden Anspruch,
**dadurch gekennzeichnet, dass**
sich der Kanal (35) symmetrisch in die erste und zweite Belüftungszone (33.1, 33.2) erstreckt und vorzugsweise an beiden Enden des Kanals (35) eine Rückschlagklappe (37) vorgesehen ist.

5. Vorrichtung nach Anspruch 3,
**dadurch gekennzeichnet, dass**
sich der Kanal (35) über die gesamte Länge des Rosts (10) erstreckt und durch Trennelemente (39) in Sektionen (40) unterteilt ist.

6. Vorrichtung nach dem vorhergehenden Anspruch,
**dadurch gekennzeichnet, dass**
die Sektionen (40) mit jeweils zwei Belüftungskammern (32.1, 32.2, 32.3) verbunden sind und zwischen den Sektionen (40) und den Belüftungskammern (32.1, 32.2, 32.3) jeweils eine Rückschlagklappe (37) oder ein Steuerventil (41) vorgesehen ist.

7. Vorrichtung nach einem der Ansprüche 4 oder 6
**dadurch gekennzeichnet, dass**
anstelle von jeweils zwei Rückschlagklappen (37) eine Wechselklappe (38) vorgesehen ist.

8. Vorrichtung nach einem der Ansprüche 3 bis 7,
**dadurch gekennzeichnet, dass**
zwischen Belüftungskammern (32.1, 32.2, 32.3) und den Kanälen (35) oder den Sektionen (40) eines Kanals (35) steuerbare Ventile vorgesehen sind.

9. Vorrichtung nach einem vorhergehenden Ansprüche,
**dadurch gekennzeichnet, dass**
die Abdichtvorrichtung (20) eine Labyrinthdichtung (21) ist.

Fig. 1

Fig. 2

Fig. 3

EP 2 362 174 A1

Fig. 4

P₀  34 35 36  90

P₃₁  33.1  P₃₂  33.2  P₃₃  33.3

10
20

P₁₁  P₁₂  P₁₃

32.1  32.2  32.3  30

31

EP 2 362 174 A1

Fig. 5a

EP 2 362 174 A1

Fig. 5b

Fig. 5c

EP 2 362 174 A1

EP 2 362 174 A1

Fig. 5d

Europäisches
Patentamt

European
Patent Office

Office européen
des brevets

# EUROPÄISCHER RECHERCHENBERICHT

**Nummer der Anmeldung**

EP 10 00 0943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 887 302 A1 (PETERS CLAUDIUS TECH GMBH [DE]) 13. Februar 2008 (2008-02-13) * Absätze [0001], [0016], [0020], [0034]; Ansprüche 1,4,6,11; Abbildungen 2-7 * * Satz 23, Absatz 27 - Satz 27 * * Satz 35, Absatz 34 - Satz 48, Absatz 35 * ----- | 1-9 | INV. F27D3/12 F27D15/02 F27D99/00 C22B1/26 B65G25/06 |
| X,D | EP 1 475 594 A1 (PETERS CLAUDIUS TECH GMBH [DE]) 10. November 2004 (2004-11-10) * Absätze [0026], [0043], [0045]; Ansprüche 8,11,15; Abbildungen 6,8,9,10,11,14 * ----- | 1-9 | |
| X | WO 02/23112 A1 (PSP ENGINEERING AS [CZ]; POSPISIL JAROSLAV [CZ]; MACUREK IVAN [CZ]; SK) 21. März 2002 (2002-03-21) * Seite 6, Zeile 25 - Seite 10, Spalte 5; Ansprüche 1,8-11; Abbildungen 2,3,4 * ----- | 1 | |
| X | "PYROSTEP - DIE 3.ROSTKUEHLER-GENERATION PRYOSTEP - THE 3RD GRATE COOLER GENERATION" KHS SYMPOSIUM, XX, XX, 1. Januar 1993 (1993-01-01), Seiten 62-69,A/B, XP000953887 * Seite 64, rechte Spalte - Seite 67, linke Spalte; Abbildungen 4,5,6 * ----- | 1 | **RECHERCHIERTE SACHGEBIETE (IPC)** F27D B65G F26B C22B F27B |
| A | WO 2009/087010 A1 (KHD HUMBOLDT WEDAG GMBH [DE]; SCHINKE KARL [DE]) 16. Juli 2009 (2009-07-16) * das ganze Dokument * ----- | 1-9 | |
| A | WO 2005/052482 A1 (KLOECKNER HUMBOLDT WEDAG [DE]; MERSMANN MATTHIAS [BE]; SCHINKE KARL [D) 9. Juni 2005 (2005-06-09) * das ganze Dokument * ----- | 1-9 | |

Der vorliegende Recherchenbericht wurde für alle Patentansprüche erstellt

| Recherchenort | Abschlußdatum der Recherche | Prüfer |
|---|---|---|
| München | 23. Juni 2010 | Gavriliu, Alexandru |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 10 00 0943

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2010

| Im Recherchenbericht angeführtes Patentdokument | Datum der Veröffentlichung | Mitglied(er) der Patentfamilie | Datum der Veröffentlichung |
|---|---|---|---|
| EP 1887302 A1 | 13-02-2008 | CN 101506608 A<br>EA 200900151 A1<br>EP 2049858 A1<br>WO 2008017500 A1 | 12-08-2009<br>30-06-2009<br>22-04-2009<br>14-02-2008 |
| EP 1475594 A1 | 10-11-2004 | AT 383560 T<br>AU 2004236319 A1<br>BR PI0410240 A<br>CA 2521959 A1<br>CN 1784582 A<br>CU 23425 A3<br>DE 212004000003 U1<br>DK 1509737 T3<br>EG 23786 A<br>WO 2004099693 A1<br>ES 2298742 T3<br>JP 2006526750 T<br>KR 20060011990 A<br>MA 27803 A1<br>MX PA05011821 A<br>PT 1509737 E<br>US 2006081444 A1<br>US 2004222068 A1 | 15-01-2008<br>18-11-2004<br>16-05-2006<br>18-11-2004<br>07-06-2006<br>08-09-2009<br>14-04-2005<br>19-05-2008<br>13-08-2007<br>18-11-2004<br>16-05-2008<br>24-11-2006<br>06-02-2006<br>01-03-2006<br>17-02-2006<br>17-03-2008<br>20-04-2006<br>11-11-2004 |
| WO 0223112 A1 | 21-03-2002 | CZ 20003294 A3<br>SK 4102003 A3 | 17-04-2002<br>05-10-2004 |
| WO 2009087010 A1 | 16-07-2009 | DE 102008003692 A1 | 30-07-2009 |
| WO 2005052482 A1 | 09-06-2005 | AT 360181 T<br>BR PI0417019 A<br>CA 2546587 A1<br>CN 1902452 A<br>DE 10355822 A1<br>DK 1695015 T3<br>EP 1695015 A1<br>ES 2285571 T3<br>JP 2007515365 T<br>PT 1695015 E<br>RU 2352884 C2<br>US 2007128565 A1 | 15-05-2007<br>13-03-2007<br>09-06-2005<br>24-01-2007<br>28-07-2005<br>17-09-2007<br>30-08-2006<br>16-11-2007<br>14-06-2007<br>04-07-2007<br>20-04-2009<br>07-06-2007 |

Für nähere Einzelheiten zu diesem Anhang : siehe Amtsblatt des Europäischen Patentamts, Nr.12/82

**EP 2 362 174 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1475594 A1

- DE 102005032518 A1